# EUROPÄISCHE PATENTSCHRIFT

(11) **EP 0 546 988 B1**
(45) Veröffentlichungstag und Bekanntmachung des Hinweises auf die Patenterteilung: **12.08.1998**
(21) Anmeldenummer: 92810881.0
(22) Anmeldetag: 13.11.1992
(51) Int. Cl.: B32B 31/30, B29C 59/10

(54) **Vorrichtung und Verfahren zur Herstellung von extrusionsbeschichteten Laminaten**
Apparatus and method for the manufacture of extrusion coated laminates
Dispositif et procédé de recouvrement par extrusion

(30) Priorität: 11.12.1991 CH 3645/91
(43) Veröffentlichungstag der Anmeldung: 16.06.1993
(73) Patentinhaber: Alusuisse Technology & Management AG, 8212 Neuhausen am Rheinfall (CH); SOFTAL Electronic GmbH, D-21107 Hamburg (CH)
(72) Erfinder: Christel, Andreas, CH-8200 Schaffhausen (CH)

(56) Entgegenhaltungen:
- EP-A- 0 461 273
- DE-A- 1 910 743
- DE-A- 3 935 013
- US-A- 3 575 762

## Beschreibung

Vorliegende Erfindung betrifft eine Vorrichtung und ein Verfahren zur Herstellung von extrusionsbeschichteten Laminaten. Die Vorrichtung enthält eine Extruderdüse mit Düsenlippe, eine Kühlwalze und eine Andruckwalze, wobei die Kühlwalze und die Andruckwalze einen Walzenspalt ausbilden und die Extruderdüse zum Walzenspalt hin gerichtet ist und aus der Düsenlippe eine Schmelze von thermoplastischen Kunststoffen austritt, die unter Ausbildung einer Beschichtungsfolie in den Walzenspalt eintritt und im Walzenspalt mit einer Trägerfolie verbunden wird, wobei im Bereich zwischen der Extruderdüse und dem Walzenspalt, in geringem Abstand zur Folie eine Vorrichtung zur Verbesserung der Haftung der Beschichtungsfolie auf der Trägerfolie angeordnet ist, wie im Anspruch 1 weiter erläutert.

Es ist bekannt, zur Verbesserung der Verbundhaftung zwischen den einzelnen Werkstoffen eines Laminats bei einer Extrusionsbeschichtung verschiedene Massnahmen zu ergreifen. bei der Extrusionsbeschichtung von Trägerfolien, wie Metallfolien, Kunststoffolien, Papieren oder Verbunden daraus, z.B. mit einer Polyethylenfolie, wird Polyethylen geschmolzen und über eine Extruderdüse ein Polyethylenfilm hergestellt. Der Polyethylenfilm wird zwischen zwei Walzen, einer Kühlwalze und einer Andruckwalze aufgenommen. In der Regel wird über die Andruckwalze eine Trägerfolie zugeführt. Zwischen der Kühlwalze und der Andruckwalze werden die extrudierte Polyethylenfolie und die Trägerfolie miteinander verbunden.

Zur Verbesserung der Haftung einer Polyethylenfolie auf einer Trägerfolie werden verschiedene Verfahren eingesetzt. Diese Verfahren präparieren die Oberfläche der Trägermaterialien. Insbesondere sind hier das Koronaverfahren und/oder die chemische Primerung und/oder die Anwendung eines Haftervermittlers zu nennen. Ferner kann das Fertigprodukt thermisch behandelt werden. bei der Koronabehandlung werden die Oberflächen der Trägermaterialien mit einer elektrischen Funkenentladung mit hoher Frequenz beschossen, die zur Bildung haftungsaktiver Gruppen führt. bei der chemischen Primerung wird eine Zwischenschicht aufgebracht, die sich gut auf der Trägerbahn verankert und andererseits Haftbrücken zum Polyethylen ausbildet. Ein anderes physikalisch wirkendes Verfahren, das die geforderte Haftung zwischen Trägerfolie und Polyethylenfolie liefern soll, besteht darin, dass die Oxidation des schmelzflüssigen PE-Filmes direkt vor dem Kontakt mit der Trägerfolie durch eine Ozonbehandlung positiv beeinflusst werden kann. Dazu soll Ozon mit technisch höchst erreichbarer Konzentration verlustarm an den Polyethylenfilm geblasen werden. (Druckschrift der Softal Elektronik GmbH, D-2000 Hamburg 70, "Sorbex", Ozonanlage zur Verbesserung der Verbundhaftung bei der Extrusionsbeschichtung). Es wurde auch festgestellt, dass bei der Extrusionsbeschichtung der schmelzflüssige PE-Film nur auf dem Umweg über Ozon behandelt werden kann. (Softal Report 2 der Firma Softal Elektronik GmbH, D-2000 Hamburg 70).

In der Praxis ist es jedoch wünschenswert auf eine Ozonbehandlung zu verzichten. . .

Aus der DE-A-1 910 743 ist eine Vorrichtung zur Behandlung von Kunststoffen durch elektrische Entladung bekannt. Die Elektroden bestehen aus einer Aluminiumleiste einerseits und einer Walze anderseits.

Aufgabe vorliegender Erfindung ist es, eine Vorrichtung und ein Verfahren zur Verfügung zu stellen, die es ermöglichen, eine Extrusionbeschichtung einer Trägerfolie durchzuführen, die zu einer Verbindung hoher Haftung zwischen Extrusionsfolie und Trägerfolie führt.

Erfindungsgemäss wird das dadurch erreicht, dass die Vorrichtung eine gegenelektrodefreie Koronabehandlungsstation gemäß Anspruch 1 aufweist.

Die erfindungsgemässe Vorrichtung ist an Extrusionsbeschichtungvorrichtungen angebracht werden, die an sich bekannt sind. Solche Vorrichtungen enthalten z.B. einen Extruder in dem der thermoplastische Kunststoff aufgeschmolzen und die Schmelze durch eine Düsenlippe zu einer Folie extrudiert wird. Die heisse Schmelze des thermoplastischen Kunststoffs kühlt sich unter Ausbildung der Folie ab. Diese Folie wird als Beschichtungsfolie zwischen eine Kühl- und eine Andruckwalze geführt. Die Kühl- und die Andruckwalze bilden einen Walzenspalt aus, der in der Regel senkrecht unter der Düsenlippe angeordnet ist. Über die Andruckwalze wird die Trägerfolie in den Walzenspalt geführt und die Beschichtungsfolie wird auf der Trägerfolie haftend angebracht. Die Trägerfolie kann verschiedene Werkstoffe enthalten. Beispielsweise kann die Trägerfolie eine Metallfolie, eine Kunststoffolie oder eine Papierbahn darstellen oder die Trägerfolie kann ein Verbund von Metall- Papierbahn und/oder Kunststoffolien, wie z.B. ein Verbund von Metall- und Kuststoffolien oder ein Verbund von Papier- und Kunststoffolien, ein Verbund von Metall- und Papierfolien oder ein Verbund von mehreren Kunststoffolien darstellen. Die Trägerfolie kann auch ein Verbund von mehreren Kunststoffolien, von mehreren Kunststoffolien mit wenigstens einer Metallfolie oder von mehreren Kunststoffolien mit wenigstens einer Papierbahn darstellen. bevorzugt werden als Werkstoffe des Trägers, thermoplastische Kunststoffe oder Metallfolien angewendet.

Als Metallfolien können beispielsweise Folien aus Aluminium, Zinn, Silber, Gold, Kupfer, Eisen oder Stahl verwendet werden.

Bevorzugt als Metallfolie wird eine Folie aus Aluminium oder Aluminiumlegierungen, wobei Aluminium einer Reinheit von z.B. 96 % und höher zweckmässig, 98,6 % und höher bevorzugt und 99,6 % und höher insbesondere, angewendet wird. Die Aluminiumfolien sollen zweckmässig besonders flexibel, feinkörnig und/oder texturfrei sein. Die bevorzugten Aluminiumlegierungen für die genannten Folien sind solche des Types AA 8079 oder AA 8101.

Die Dicke der Folien aus Aluminium oder Aluminiumlegierungen beträgt z.B. 3 bis 100 µm, zweckmässig 7 bis 60 µm und bevorzugt 10 bis 50 µm.

Als thermoplastische Kunststoffe zur Bildung der Folie im Extruder und als Kunststoffolien zur Bildung oder als Bestandteil der Trägerfolien kommen thermoplastische Polymere in Frage. In beispielhafter Aufzählung können die thermoplastischen Polymere oder Thermoplaste auf Acetal-, Acryl-, Amid-, Arylensulfid-, Arylensulfon-, Carbonat-, Cellulose-, Ester-, Imid-, Olefin-, Styrol- und Vinyl-Basis genannt werden.

Beispiele von Thermoplasten auf Acetal-Basis sind Polyvinylbutyral, Polyformaldehyd, Polyacetaldehyd, Mischpolymere und Terpolymere derselben.

Beispiele für Thermoplaste auf Acryl-Basis sind Polyalkylmethacrylate, z.B. Polymethylmethacrylate, Polytert.-butylacrylat, Mischpolymere und Terpolymere derselben, Vinyl-, Styrol-, Acrylatester- und Methacrylatestermischpolymere und -terpolymere von Acrylnitril und Methacrylnitril.

Zu den Thermoplasten auf Amid-Basis gehören beispielsweise Polyamid 6, ein Homopolymerisat aus ε-Caprolactam (Polycaprolactam); Polyamid 11, ein Polykondensat aus 11-Aminoundecan-säure (Poly-11-aminoundecanamid); Polyamid 12, ein Homopolymerisat aus ω-Laurinlactam (Polylaurinlactam); Polyamid 6,6, ein Homopolykondensat aus Hexamethylen-diamin und Adipinsäure (Polyhexamethylenadipamid); Polyamid 6,10, ein Homopolykondensat aus Hexamethylendiamin und Sebacinsäure (Polyhexamethylensebacamid); Polyamid 6,12, ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamethylenterephthalamid), sowie Gemische davon.

Beispiele für Thermoplaste auf Carbonat-Basis sind Polycarbonate auf Basis von 2,2-(4,4-Dihydroxy-diphenol)-propan oder anderer Dihydroxydiarylalkanen oder Mischungen von Dihydroxydiarylalkanen mit anderen aromatischen oder aliphatischen Dihydroxyverbindungen, wie 2,2-(4,4'-Dihydroxy-3,3',5,5'-tetrabromdiphenyl)-propan und 2,2-(4,4'-Dihydroxy 3,3', 5,5'-tetramethyldiphenyl)-propan oder beruhen auf 1,1-(4,4'-Dihydroxy-3,3',5,5'-tetrachlordiphenyl)-propan oder 2,2-(4,4'-Dihydroxy-3,3',5,5'-tetramethyldiphenyl)-propan, jeweils umgesetzt beispielsweise mit Phosgen oder Diphenylcarbonat. Mitumfasst sind auch modifizierte Polycarbonate, auf ein Vinylpolymerisat aufgepfropfte Polycarbonate oder mit beispielsweise ABS-Polymerisaten abgemischte Polycarbonate.

Thermoplaste auf Ester-Basis sind beispielsweise Polyalkylenterephthalate oder Polyalkylenisophthalate, mit Alkylengruppen oder -resten mit 2 bis etwa 10 Kohlenstoffatomen, wobei die Alkylengruppen oder -reste auch mit weinigstens einem -O- unterbrochen sein können, wie z.B. Polyethylenterephthalat, Polybutylenterephthalat (Polytetramethylenterephthalat), Polydecamethylenterephthalat, Poly-1,4-cyclohexyldimethylolterephthalat, Mischpolymere und Terpolymere davon.

Beispiele für Thermoplaste auf Arylenoxid-, Arylensulfon- und Arylensulfid-Basis sind Polyphenylenoxid, Polyphenylensulfid, Polyethersulfon, Polyarylether, Polyarylsulfon oder Polysulfon.

Thermoplaste auf Acetal-, Acryl-, Ester- und Arylenbasis können z.B. auch als Block-copolymere oder als Pfropfpolymere angewendet werden.

Thermoplaste auf Cellulose-Basis sind z.B. Celluloseester, wie Celluloseacetat, Cellulosepropionat, Cellulosebutyrat und Celluloseacetatbutyrat oder polymermodifiertes Celluloseacetatbutyrat.

Beispiele für Thermoplaste auf Imid-Basis sind Poly-N-alkylenmaleimide, wie Poly-N-methylmaleimid, Mischpolymere, Terpolymere oder Blockmischpolymer-und gepfropfte Kautschukmoidifikationen derselben, ferner Poly-imde und Copoly-(Imid/Amide) von Pyromellithdianhydrid und m-Phenylendiamin oder ähnliche Polyarylenimide und Copoly-(Arylenimid/Amide).

Beispiele für Thermoplaste auf Olefin-Basis sind Polyolefine, wie Polyethylen, z.B. Polyethylen hoher Dichte (HDPE, Dichte grösser als 0,944g/cm³), Polyethylen mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³) und lineares Polyethylen niedriger Dichte (LLDPE, Dichte 0,916-0,925 g/cm³), Polypropylen, Poly-1-buten, Poly-3-methylbuten, Poly-4-methylpenten und Copolymere davon, wie z.B. von Polyethylen mit Vinylacetat, Vinylacetat und Acrylestern, Vinylalkohol, Acrylsäure, z.B. Ionomerharze, wie Copolymerisate von Ethylen mit etwa 11 % Acrylsäure, Methacrylsäure, Acrylestern, Methacrylestern, Tetrafluorethylen oder Polypropylen, sowie statistische Copolymere, Block-Copolymere oder Olefinpolymer-Elastomer-Mischungen.

Beispiele für Thermoplaste auf Styrol-Basis sind Polystyrol, Co- und Ter-Polymerisate davon, Copolymerisate mit Acrylnitril (SAN), Copolymerisate mit Butadien (SB) und Terpolymerisate, die Synthesekautschuke und Acrylnitril enthalten (ABS).

Als Thermoplaste auf Vinyl-Basis, die angewendet werden können, sind zu nennen die Polymere des Vinylchlorids und Vinylkunststoffe, enthaltend Vinylchlorideinheiten in deren Struktur, wie Polyvinylchlorid, Copolymere und Pfropfpolymere davon, beispielsweise Vinylchlorid-Ethylen-Polymer, Vinylchlorid-Ethylen-Methacrylat-Polymer, Vinylchlorid-Ethylen-Vinylacetat -Polymer, Vinylchlorid-Methylmethacrylat-Polymer, Vinylchlorid-Octylacrylat-Polymer, Vinylchlorid-Vinylidenchlorid-Polymer, Vinylchlorid-Vinylacetat-Maleinsäure-Polymer, oder Vinylchlorid-Vinylidenchlorid-Acrylnitril-Polymer, sowie gepfropfte Modifikationen. Die Thermoplaste auf Vinyl-Basis können auch auf an sich bekannte Weise mit Primär- oder Sekundärweichmacher weichgemacht sein.

Die oberste Schicht der Trägerfolie oder des Trägerfolienverbundes, gegen welche die extrudierte Folie kaschiert wird, enthält bevorzugt ein Polyolefin, wie Polyethylen oder Polypropylen, Polyamid, wie Polyamid 6,6, Polyester oder Copolyester, wie Polyalkylenterephthalat oder Copolymerisate enthaltend die genannten Polymere. besonders bevorzugt als oberste Schicht auf einer Trägerfolie sind axial und insbesondere biaxial orientierte Folien und Folieverbunde. Ganz besonders bevorzugt sind axial oder biaxial orientierte Folien enthaltend oder bestehend aus Polyethylenterephthalat.

Als thermoplastische Kunststoffe deren Schmelze zu einer Beschichtungsfolie extrudiert werden, können die oben genannten thermoplastischen Kunststoffe angewendet werden. bevorzugte Beispiele sind die Polyolefine, wie vorstehend genannt. besonders bevorzugte Beispiele von thermoplastischen Kunststoffen, die extrudiert werden können, sind Polyethylene, Polypropylene und deren modifizierten Formen.

Bei der Trägerfolie hat die Metall- resp. Aluminiumfolie insbesondere die Bedeutung als Sperrschicht und dabei insbesondere als Sperrschicht gegen Licht, Gase und Dämpfe. Deshalb können auch anstelle von oder zusammen mit der Metallfolie oder den Metallfolien andere Sperrschichten, beispielsweise Keramikschichten oder metallische Schichten angewendet werden. Die keramischen oder metallischen Schichten benötigen in der Regel ihrerseits einen Träger, vorzugsweise eine Kunststoffolie, wie z.B. eine Polyesterfolie, wie eine Polyalkylenterephthalatfolie, eine Polyolefinfolie, eine Polyamidfolie oder eine Polyvinylchloridfolie

Als keramische Schicht können die Oxide und/oder Nitride von Metallen oder Halbmetallen, z.B. diejenigen des Siliciums, des Aluminiums, des Eisens, Nickels, Chroms oder Bleis angewendet werden. Damit umfasst sind auch die Oxinitride der genannten Metalle oder Halbmetalle. Als keramische Schicht werden zweckmässig Oxide der allgemeinen Formel SiOₓ, wobei x eine Zahl von 1 bis 2 darstellt, oder der allgemeinen Formel Al_{y}O_{z}, wobei y/z eine Zahl von 0,2 bis 1,5 darstellt, angewendet.

Als Keramikschichten sind die Siliciumoxide oder Aluminiumoxide zweckmässig. Die Siliciumoxide können die Formel SiOₓ, wobei x bevorzugt eine Zahl von 1 bis 2 darstellt, besonders bevorzugt von 1,1 bis 1,9 und insbesondere von 1,2 bis 1,7 darstellt, aufweisen. Die Aluminiumoxide können die Formel Al_{y}O_{z}, wobei y/z z.B. eine Zahl von 0,2 bis 1,5 und bevorzugt von 0,65 bis 0,85 darstellt, aufweisen.

Die keramische Schicht wird beispielsweise durch eine Vakuumdünnschichttechnik, zweckmässig auf der Basis von Elektronenstrahlverdampfen oder Widerstandsheizen oder induktivem Heizen aus Tiegeln aufgebracht. bevorzugt ist das Elektronenstrahlverdampfen. Die beschriebenen Verfahren können reaktiv und/oder mit Ionenunterstützung gefahren werden.

Die Dicke der Keramikschicht kann von 5 bis 500 nm betragen, wobei Schichtdicken von 10 bis 200 nm bevorzugt und von 40 bis 150 nm besonders bevorzugt sind.

Die Sperrschicht kann auch eine metallische Schicht darstellen. Beispiele von metallischen Schichten sind Aluminiumschichten oder Kupferschichten. Metallische Schichten werden in der Regel durch Sputtern, Aufdampfen oder stromlose chemische oder elektrolytische Abscheidung z.B. auf eine Kunststoffschicht aufgebracht.

Metallische Schichten sind beispielsweise 5 bis 500 nm, zweckmässig 10 bis 200 nm und vorzugsweise 40 bis 150 nm dick.

Es ist auch bevorzugt, als Trägerfolie eine Kunststoffolie mit Sperreigenschaften allein oder im Verbund mit anderen Kunststoffolien, wie im einzelnen vorstehend genannt, anzuwenden. Folien mit Sperreigenschaften sind an sich bekannt und können z.B. aus Ethylenvinylalkohol-Copolymeren, Polyvinylidenchlorid, Polyacrilnitril, z.B. BAREX®, Polyacryl-Polyamid-Copolymere Sperrschicht-Copolyester, z.B. Mitsui B-010, aromatische und amorphe Polyamide, z.B. N-MXD6® der Mitsubishi Gas Chemical, bestehen oder diese Polymere enthalten.

Die vorstehend genannten Kunststoffolien und Metallfolien können auf an sich bekannte Weise zu den entsprechenden Laminaten oder Verbunden, die als Trägerfolie dienen, verarbeitet werden.

In der Praxis werden dazu zur Verbindung der Kunststoffolien unter sich, der Metallfolien unter sich, der Kunststoffolien mit Metallfolien oder im Falle von Folienverbunden, auch zwischen diesen Verbunden, z.B. Kaschierkleber und/oder Haftvermittler angewendet. Geeignete Haftvermittler sind beispielsweise Vinylchlorid-Copolymerisate, polymerisierbare Polyester, Vinylpyridin-Polymerisate, Vinylpyridin-Polymerisate in Kombination mit Epoxidharzen, Butadien-Arylnitril-Methacrylsäure-Copolymerisate, Phenolharze, Kautschukderivate, Acrylharze, Acrylharze mit Phenol bzw. Epoxidharzen, siliciumorganische Verbindungen, wie Organosilane, modifizierte Polyolefine, wie säuremodifizierte Polyolefine oder Ethylenacrylsäure (EAA).

Weitere geeignete Haftvermittler sind Klebstoffe wie Nitrilkautschuk-Phenolharze, Epoxide, Acrylnitril-butadien-kautschuk, urethanmodifizierte Acryle, Polyester-co-Polyamide, Heissschmelzpolyester, mit Heissschmelzpolyester vernetzte Polyisocyanate, polyisobutylenmodifizierte Styrol-butadien-kautschuke, Urethane, Ethylen-Acrylsäure-Mischpolymere und Ethylenvinylacetat-Mischpolymere.

Werden Kaschierkleber angewendet, so können die Kaschierkleber lösungsmittelhaltig oder lösungsmittelfrei und auch wasserhaltig sein. Beispiele sind lösungsmittelhaltige, lösungsmittelfreie oder wässrige Acrylatkleber oder Polyurethan-Kleber.

Bevorzugt werden Kaschierkleber auf Polyurethan-Basis.

Zur Unterstützung und Verbesserung der Verbundhaftung von Haftvermittler und Kaschierkleber, zwischen den Schichten eines Trägerfolienverbundes ist es oft zweckmässig, der Haftvermittlerschicht auf der kleberzugewandten Seite eine ausreichende Oberflächenspannung zu vermitteln. Die Erhöhung der Oberflächenspannung kann z.B. durch eine Flammvorbehandlung oder eine Koronabehandlung erfolgen.

Die Laminierung der einzelnen Schichten der Trägerfolie kann beispielsweise durch Heisskalandrieren, Kaschierung, Extrusionsbeschichtung oder durch Coextrusionsbeschichtung erfolgen.

Die Beschichtungsfolie aus thermoplastischen Kunststoffen, die durch Extrusion hergestellt und auf die Trägerfolie kaschiert wird, hat zweckmässig eine Dicke von 10 µm und grösser und dünner als 500 µm, wobei eine Dicke von 20 bis 250 µm zweckmässig und eine Dicke von 40 bis 120 µm bevorzugt ist.

Die Dicke der Trägerfolie ist an sich unkritisch und richtet sich nach dem Verwendungszweck des fertigen Verbundes.

Die erfindungsgemässe Koronabehandlungsstation befindet sich zwischen der Extruderdüse und dem Walzenspalt.

In erfindungsgemässer Ausführungsform wird als Koronabehandlungsstation eine gegenelektrodenfreie Koronabehandlungsstation eingesetzt. Damit soll ausgedrückt werden, dass sich die Entladungselektrode und die Gegenelektrode auf nur einer Seite der extrudierten Kunststoffolie befindet. D.h. beide Elektroden befinden sich auf derselben Seite der Kunststoffolie, so dass die zu behandelnde Oberfläche dem elektrischen Feld nicht direkt ausgesetzt ist. Die Entladung brennt mit einem Funkenkanal, der beispielsweise auf 3 bis 15 mm und bevorzugt 6 mm, von der Folienfläche entfernt, eingestellt ist. Dies wird mit einer Vorrichtung erzielt, die wenigstens zwei Stiftelektroden aufweist, zwischen denen die Koronaentladung brennt. Bevorzugt kann die gegenelektrodenfreie Koronaentladung wenigstens zwei Stiftelektroden, zwischen denen die Koronaentladung brennt, und Mittel, die einen auf die zu behandelnde Folie gerichteten Gasstrahl erzeugen, aufweisen. Die Koronaentladung brennt innerhalb eines Kopfstückes insbesondere zwischen zwei dielektrikumsfreien Stiftelektroden.

Solche Mittel, die einen Gasstrahl erzeugen, sind z. B. Düsen, Schlitzdüsen, Lochdüsen usw., die über ein Leitungssystem mit einer Druckgasquelle, wie einem Druckgasbehälter oder Kompressor, verbunden sind.

Als Gas zur Aufrechterhaltung des Gasstrahls kann beispielsweise Luft, Sauerstoff, Stickstoff, Argon, Gemische davon oder ein Kohlendioxyd-Argon-Gemisch verwendet werden. Die Gase sind bevorzugt trocken. Die Gase werden in der Regel mit Druck, an der Elektrode vorbei, auf die Folie gerichtet, angewendet.

In erfindungsgemässe Ausführungsform ist die Koronabehandlungsstation in einem Bereich zwischen der Düsenlippe des Extruders und dem Walzenspalt angeordnet, in dem die Beschichtungsfolie noch als schmelzflüssiger oder angeschmolzener Folien vorliegt. Dadurch findet die Koronabehandlung auf einem Oberflächenteil der sich bildenden Beschichtungsfolie ab, der sich noch im Zustand der Schmelze oder in noch angeschmolzenem Zustand befindet und auf dem der thermoplastische Kunststoff noch nicht erstarrt ist.

In weiterer erfindungsgemässe Ausführungsform ist die Koronabehandlungsstation zwischen der Düsenlippe und dem Walzenspalt angeordnet, wobei die Koronabehandlungsstation in der Höhe zwischen Düsenlippe und engster Stelle des Walzenspalts derart angeordnet ist, dass die Koronabehandlungsstation der engsten Stelle des Walzenspalts näher liegt als der Düsenlippe.

Damit wird z.B. erreicht, dass der Behandlungsort tief im Extruderspalt liegt und die behandelte Oberfläche nicht durch eine mögliche Überstreckung des schmelzflüssigen Filmes nachteilig beeinflusst wird.

Die Höhe zwischen der Extruderdüse und dem Walzenspalt ist möglichst gering zu halten. Eine kurze Distanz zwischen der Düsenlippe und dem Walzenspalt bedeutet eine relativ kurze Abkühlungszone. Dies bedeutet auch, dass die Temperatur der Schmelze im Extruder relativ niedrig gehalten werden kann.

Die Koronabehandlungsvorrichtung im Walzenspalt, die ihrerseits schmal baut, macht es insbesondere möglich, die Distanz zwischen Düsenlippe und Walzenspalt sehr klein zu halten. Zur weiteren Steuerung der Temperatur des extrudierten Kunststoffilmes kann das Gas der Koronabehandlungsstation auch vorgeheizt werden.

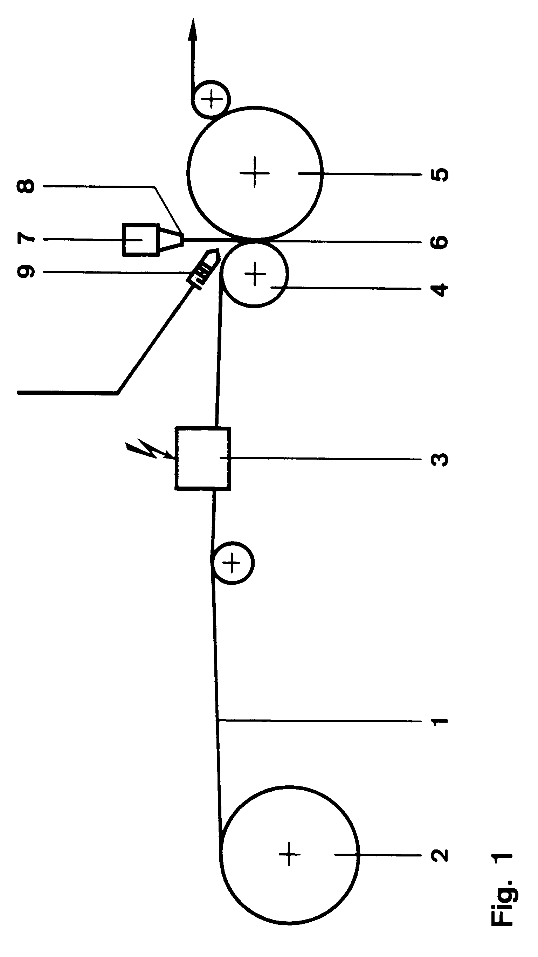

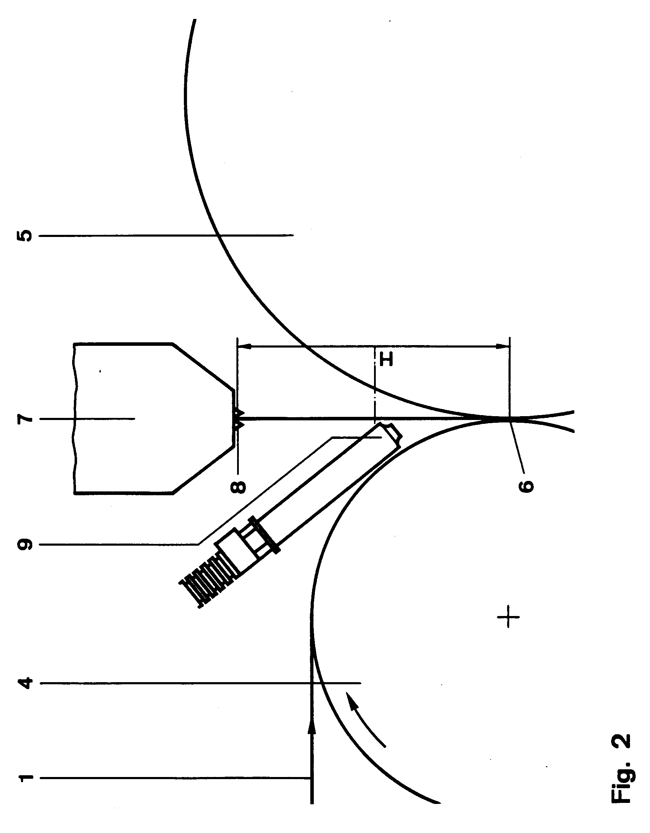

Die Figuren 1 und 2 erläutern beispielhaft vorliegende Erfindung näher.

Fig. 1 zeigt eine schematische Darstellung der Vorrichtung zur Herstellung von Laminaten nach vorliegender Erfindung. Die Trägerfolie (1) wird von einer Rolle (2) abgewickelt und gegebenenfalls über eine Koronabehandlung (3) oder eine andere bekannte Behandlungsart zur Aktivierung der Oberflächen einer Andruckwalze (4) zugeführt. Zusammen mit der Kühlwalze (5) bilden die beiden Walzen einen Walzenspalt (6) aus. Ein Extruder (7) ist mit seiner Düsenlippe (8) gegen diesen Walzenspalt (6) gerichtet. Die Koronaentladungsvorrichtung (9) befindet sich tief im Walzenspalt (6).

Fig. 2 stellt einen Ausschnitt vorbeschriebener Vorrichtung dar. Zu erkennen sind die Andruckwalze (4) und die Kühlwalze (5), die den Walzenspalt (6) ausbilden, ferner die Extruder (7) mit Düsenlippe (8) und die Koronabehandlungsstation (9) ohne Gegenelektrode. Mit H ist die Höhe zwischen der Düsenlippe und der engsten Stelle des Walzenspalts (6) bezeichnet. Die Koronabehandlungsstation (9) soll sich zweckmässig unterhalb der halben Höhe H befinden.

Vorliegende Erfindung betrifft auch ein Verfahren zur Herstellung von extrusionsbeschichteten Laminaten in der erfindungsgemässen Vorrichtung, wobei die extrudierte Folie einer Koronaentladungsbehandlung ausgesetzt wird. Die Folie wird einseitig einer Koronaentladungsbehandlung ausgesetzt. Die Koronaentladung brennt zwischen wenigstens zwei Stiftelektroden und insbesondere wird mittels eines gerichteten Gasstrahls auf die Folie gelenkt.

Die Koronaentladungsbehandlung wird auf einem Oberflächenteil der sich bildenden Beschichtungsfolie ausgeführt, der sich noch im Zustande der Schmelze oder in noch angeschmolzenem Zustand befindet.

Bei einer vorgegebenen Vorrichtung zur Ausführung des Verfahrens kann beispielsweise durch die Temperatur der Schmelze des thermoplastischen Kunststoffes, der Giessgeschwindigkeit und allenfalls anderer Parameter die Abkühlgeschwindigkeit derart eingestellt werden, dass sich der gebildete Film, resp. die Beschichtungsfolie, zumindest an der Oberfläche, noch in einem Zustand der Schmelze befindet, wenn die Koronaentladung auf die betreffende Oberfläche einwirkt.

Bei der erfindungsgemässen Koronaentladungsbehandlung kann die Folie mit einer Geschwindigkeit von 5 bis 500 m/min behandelt werden. Zweckmässig ist eine Geschwindigkeit von 80 bis 200 m/min. Die breite der Folie kann beispielsweise 80 bis 2200 mm betragen, wobei breiten von 600 bis 1400 mm bevorzugt werden. Die Koronabehandlungsvorrichtung wird beispielsweise mit einem Generator mit einer Leistung bis zu 30 kW betrieben. Die Wechselspannung beträgt dabei beispielsweise zwischen 12 bis 20 kV. Die Frequenz beträgt zweckmässig etwa 20 kHz und darüber, in der Regel bis 30 kHz, wobei Frequenzen zwischen 25 und 30 kHz bevorzugt werden.

Ist zum Betrieb der Koronabehandlungsvorrichtung ein gerichteter Gasstrahl vorgesehen, so kann der Gasfluss beispielsweise bis zu 1000 l/h betragen. Zweckmässig ist ein Gasfluss von 200 bis 600 l/h und besonders bevorzugt wird ein Gasfluss in einer Menge von 400 l/h.

In der Praxis werden die zu behandelnden Folien auf eine Oberflächenenergie von z.B. 36 bis 60 mN/m behandelt.

Vorliegendes Verfahren vermag die Verbundhaftung einer extrusionsbeschichteten Folie auf einer Trägerfolie wesentlich zu erhöhen und kann andere Vorbehandlungen ersetzen oder die Wirkung bekannter Vorbehandlungen verstärken.

Gegebenenfalls kann die Trägerfolie auch auf der zu beschichtenden Seite mit einem Haftvermittler oder einem Kleber beschichtet sein. Durch die erfindungsgemässe Behandlung erhöht sich dann die Haftung der Beschichtungsfolie auf der mit einem Haftvermittler oder Kleber behandelten Trägerfolie.

Es kann auch mit vorliegendem Verfahren erreicht werden, dass die Extrusionsbeschichtung direkt auf einen Träger erfolgen kann, ohne einen Kleber oder einen Haftvermittler anzuwenden.

Andere Vorteile liegen darin, dass thermoplastische Kunststoffe bei tieferen Temperaturen als bis anhin zu den Beschichtungsfolien verarbeitet werden können.

## Patentansprüche

1. Vorrichtung zur Herstellung von extrusionsbeschichteten Laminaten enthaltend eine Extruderdüse (7) mit Düsenlippe (8), eine Kühlwalze (5) und eine Andruckwalze (4), wobei die Kühlwalze (5) und die Andruckwalze (4) einen Walzenspalt (6) ausbilden und die Extruderdüse (7) zum Walzenspalt (6) hin gerichtet ist und aus der Düsenlippe (8) eine Schmelze von thermoplastischen Kunststoffen austritt, die unter Ausbildung einer Beschichtungsfolie in den Walzenspalt (6) eintritt und im Walzenspalt (6) mit einer Trägerfolie (1) verbunden wird, wobei im Bereich zwischen der Extruderdüse (7) und dem Walzenspalt (6), in geringem Abstand zur Folie, eine Vorrichtung zur Verbesserung der Haftung der Beschichtungsfolie, auf den weiteren Werkstoffen, die das Laminat bilden, angeordnet ist, wobei
diese Vorrichtung eine gegenelektrodefreie Koronabehandlungsstation (9) aufweist,
dadurch gekennzeichnet, dass
die gegenelektrodefreie Koronaentladungsstation (9) innerhalb eines Kopfstückes wenigstens zwei Stiftelektroden aufweist, zwischen denen die Koronaentladung brennt und dass die Koronabehandlungsstation (9) zwischen der Düsenlippe (8) und dem Walzenspalt (6) angeordnet ist, wobei die Koronabehandlungsstation (9) in der Höhe zwischen Düsenlippe (8) und engster Stelle des Walzenspalts (6) derart angeordnet ist, dass die Koronabehandlungsstation (9) der engsten Stelle des Walzenspalts (6) näher liegt als der Düsenlippe (6), wobei die Beschichtungsfolie sich noch im Zustande der Schmelze oder in noch angeschmolzenen Zustand befindet.

2. Vorrichtung nach Anspruch 1, dadurch gekennzeichnet, dass die gegenelektrodefreie Koronaentladungsstation (9) innerhalb eines Kopfstückes wenigstens zwei Stiftelektroden, zwischen denen die Koronaentladung brennt und Mittel, die einen auf die zu behandelnde Folie gerichteten Gasstrahl erzeugen, aufweist.

3. Verfahren zur Herstellung von extrusionsbeschichteten Laminaten in einer Vorrichtung nach Anspruch 1, wobei aus der Düsenlippe (8) eine Schmelze von thermoplastischen Kunststoffen austritt, die unter Ausbildung einer Beschichtungsfolie in den Walzenspalt (6) eintritt und im Walzenspalt (6) mit einer Trägerfolie verbunden wird, wobei die extrudierte Folie im Bereich zwischen der Extruderdüse (7) und dem Walzenspalt (6) in geringem Abstand zur Folie einseitig durch einer gegenelektrodefreie Koronabehandlungsstation auf einem Oberflächenteil einer Koronaentladungsbehandlung ausgesetzt wird,
dadurch gekennzeichnet, daß
die Koronaentladung innerhalb eines Kopfstückes zwischen wenigstens zwei Stiftelektroden brennt und daß in dem Bereich der Koronabehandlungsstation die Beschichtungsfolie sich noch im Zustande der Schmelze oder in noch angeschmolzenen Zustand befindet.

4. Verfahren nach Anspruch 3, dadurch gekennzeichnet, dass die Koronaentladung mittels eines gerichteten Gasstrahls auf die extrudierte Folie gelenkt wird.

5. Verfahren nach Anspruch 3, dadurch gekennzeichnet, dass die extrudierte Folie einer Koronaentladungsbehandlung ausgesetzt wird, wobei die Koronaentladung mittels eines gerichteten Gasstrahles, enthaltend oder bestehend aus Luft, Sauerstoff, Stickstoff, Argon oder ein Kohlendioxid-Argon Gemisch, auf die extrudierte Folie gelenkt wird.

## Claims

1. Device for producing extrusion-coated laminates containing an extruder nozzle (7) with nozzle lip (8), a cooling roller (5) and a contact roller (4), wherein the cooling roller (5) and the contact roller (4) form a roller gap (6) and the extruder nozzle (7) is directed towards the roller gap (6) and a melt of thermoplastic plastics emerges from the nozzle lip (8) and enters the roller gap (6) while forming a coating film and is joined to a substrate film (1) in the roller gap (6), wherein a device for promoting adhesion of the coating film to the further materials forming the laminate is disposed in the region between the extruder nozzle (7) and the roller gap (6) at a slight distance from the film, wherein this device has a corona treatment station (9) without a counter-electrode, characterised in that the corona discharge station (9) without a counter-electrode within a head piece has at least two pin electrodes, between which the corona discharge burns, and in that the corona treatment station (9) is disposed between the nozzle lip (8) and the roller gap (6), wherein the corona treatment station (9) is disposed at the level between nozzle lip (8) and narrowest point of the roller gap (6), such that the corona treatment station (9) lies nearer to the narrowest point of the roller gap (6) than the nozzle lip (6), wherein the coating film is still in the molten state or still in the partially molten state.

2. Device according to claim 1, characterised in that the corona discharge station (9) without a counter-electrode within a head piece has at least two pin electrodes, between which the corona discharge burns, and means which produce a gas jet directed onto the film to be treated.

3. Process for producing extrusion-coated laminates in a device according to claim 1, wherein a melt of thermoplastic plastics emerges from the nozzle lip (8) and enters the roller gap (6) while forming a coating film and is joined to a substrate film in the roller gap (6), wherein the extruded film is subjected to a corona discharge treatment in the region between the extruder nozzle (7) and the roller gap (6) at a slight distance from the film on one side by means of a corona treatment station without a counter-electrode on a surface part, characterised in that the corona discharge burns within a head piece between at least two pin electrodes, and in that in the region of the corona treatment station the coating film is still in the molten state or still in the partially molten state.

4. Process according to claim 3, characterised in that the corona discharge within a head piece is steered by means of a gas jet directed onto the extruded film.

5. Process according to claim 3, characterised in that the extruded film is subjected to a corona discharge treatment, wherein the corona discharge is steered onto the extruded film by means of a directional gas jet containing or consisting of air, oxygen, nitrogen, argon or a carbon dioxide-argon mixture.

## Revendications

1. Dispositif de fabrication de stratifiés revêtus par extrusion, contenant une buse d'extrusion (7) avec une lèvre de buse (8), un cylindre de refroidissement (5) et un cylindre de pression (4), dans lequel le cylindre de refroidissement (5) et le cylindre de pression (4) forment une lente entre cylindres (6) et la buse d'extrusion (7) est orientée vers la fente entre cylindres (6) et dans lequel, de la lèvre de buse (8), sort un bain de fusion de plastiques thermoplastiques qui entrent dans la lente entre cylindres (6) en formant une feuille de revêtement et se relie, dans la fente entre cylindres (6), à une feuille support (1), dans lequel, dans la zone située entre la buse d'extrusion (7) et la lente entre cylindres (6), à faible distance de la feuille est disposé un dispositif pour améliorer l'adhérence de la feuille de revêtement sur les autres matériaux qui forment le stratifié, ce dispositif présentant une station de traitement par effet corona (9) sans contre-électrode,
caractérisé par le fait
que la station de traitement par effet corona (9) sans contre-électrode présente, à l'intérieur d'une pièce de tête, deux électrodes-pointues entre lesquelles brûle la décharge corona et
que la station de traitement par effet corona (9) est disposée entre la lèvre de buse (8) et la fente entre cylindres (6), la station de traitement par effet corona (9) étant disposée, en hauteur, entre la lèvre de buse (8) et l'endroit le plus étroit de la fente entre cylindres (6) de façon que la station de traitement par effet corona (9) se trouve plus près de l'endroit le plus étroit de la lente entre cylindres (6) que de la lèvre de buse (6), la feuille de revêtement se trouvant encore à l'état fluide de fusion ou à l'état fondu.

2. Dispositif selon la revendication 1, caractérisé par le fait que la station de traitement par effet corona (9) sans contre-électrode présente, à l'intérieur d'une pièce de tête, au moins deux électrodes-pointues entre lesquelles brûle la décharge corona, ainsi que des moyens qui produisent un jet de gaz dirigé sur la feuille à traiter.

3. Procédé de fabrication de stratifiés revêtus par extrusion dans un dispositif selon la revendication 1, dans lequel, de la lèvre de buse (8) sort un bain de fusion de plastiques thermoplastiques qui entrent dans la fente entre cylindres (6) en formant une feuille de revêtement et se relie à une feuille support dans la fente entre cylindres (6), dans lequel la feuille extrudée est exposée, dans la zone située entre la buse d'extrudeuse (7) etla fente entre cylindres (6), à faible distance de la feuille, d'un coté, par une station de traitement par effet corona sans contre-électrode, sur une partie de sa surface, à un traitement par décharge corona,
caractérisé par le fait
que la décharge corona brûle à l'intérieur d'une pièce de tête, entre au moins deux électrodes-pointues et que dans la zone de la station de traitement par effet corona la feuille de revêtement se trouve encore à l'état de bain de fusion ou à l'état encore fondu.

4. Procédé selon la revendication 3, caractérisé par le fait que la décharge corona à l'intérieur d'une pièce de tête est dirigée sur la feuille extrudée au moyen d'un jet de gaz orienté.

5. Procédé selon la revendication 3, caractérisé par le fait que la feuille extrudée est exposée à un traitement par décharge corona, la décharge corona étant dirigée sur la feuille extrudée au moyen d'un jet de gaz orienté contenant, ou constitué de, air, oxygène, azote, argon ou un mélange argon-dioxyde de carbone.
